# EUROPÄISCHE PATENTSCHRIFT

(11) **EP 3 136 035 B1**
(45) Veröffentlichungstag und Bekanntmachung des Hinweises auf die Patenterteilung: **14.11.2018**
(21) Anmeldenummer: 16178777.5
(22) Anmeldetag: 11.07.2016
(51) Int. Cl.: G05D 23/02

(54) **WÄRMETAUSCHER IN PLATTENBAUWEISE MIT BYPASS SOWIE VERFAHREN ZUR HERSTELLUNG EINES WÄRMETAUSCHERS IN PLATTENBAUWEISE MIT BYPASS**
PLATE HEAT EXCHANGER WITH BYPASS AND METHOD FOR PRODUCING A PLATE HEAT EXCHANGER WITH BYPASS
ÉCHANGEUR THERMIQUE À PLAQUES COMPRENANT UNE DÉRIVATION ET PROCÉDÉ DE FABRICATION D'UN ÉCHANGEUR THERMIQUE À PLAQUES COMPRENANT D'UNE DÉRIVATION

(30) Priorität: 28.08.2015 DE 102015216481
(43) Veröffentlichungstag der Anmeldung: 01.03.2017
(73) Patentinhaber: Volkswagen Aktiengesellschaft, 38440 Wolfsburg (DE)
(72) Erfinder: Zipser, Heinz, 30171 Hannover (DE); Krügel, Jens, 30926 Seelze (DE); Bröcker, Timm, 38442 Wolfsburg (DE)

(56) Entgegenhaltungen:
- EP-A1- 1 772 693
- DE-A1-102008 020 609
- DE-A1-102009 024 263
- DE-U1- 9 309 741
- KR-B1- 101 526 427
- US-A- 4 669 532

## Beschreibung

Die Erfindung betrifft einen Wärmetauscher in Plattenbauweise mit Bypass sowie ein Verfahren zur Herstellung eines Wärmetauschers in Plattenbauweise mit Bypass. Insbesondere betrifft die Erfindung einen Wärmetauscher, bei dem eine außenseitige Kühlplatte mit einer quer zu den Erstreckungsrichtungen der Kühlplatte ausgebildeten Einströmöffnung versehen ist, die es ermöglicht, den Wärmetauscher ohne Zwischenelemente mit der außenseitigen Kühlplatte unmittelbar angrenzend an ein Maschinenelement mit einer korrespondierenden Ausströmöffnung eines zu kühlenden Fluides anzuordnen.

Aus DE 10 2010 033 125 A1 ist eine Wärmetauschereinrichtung mit einem in einem Gehäuse angeordneten Einströmbereich, einem Ausströmbereich und einem Wärmetauscherbereich bekannt, bei der ein Bypassventil vorgesehen ist, das mit einem den Wärmetauscherbereich umgehenden in den Ausströmbereich mündenden Bypasskanal verbunden ist, wobei das Bypassventil und der Bypasskanal vollständig innerhalb des Gehäuses angeordnet sind. Bei dieser Wärmetauschereinrichtung sind eine in den Einströmbereich mündende Leitung und eine aus dem Ausströmbereich führende Leitung jeweils seitlich auf gegenüberliegenden Seiten des Gehäuses derart angeordnet, dass das Fluid beim Einströmen, Ausströmen und beim Durchströmen von Lamellen des Wärmetauschers eine Strömungsrichtung aufweist, die in einer Erstreckungsrichtung der Lamellen orientiert ist.

Aus DE 10 2005 020 959 A1 ist eine Schmierölversorgungseinrichtung für eine Brennkraftmaschine mit einer Hauptölpumpe und einem als Ölkühler dienenden Öl/Wasser-Wärmetauscher in Plattenbauweise bekannt. Bei dieser Einrichtung ist zwischen der Hauptölpumpe und dem Öl/Wasser-Wärmetauscher eine über ein Sicherheitsventil gesteuerte, von dem Öl/Wasser-Wärmetauscher baulich getrennte Bypassleitung vorgesehen, welche im Bedarfsfall genutzt wird, um den maximalen Öldruck zu begrenzen.

Aus DE 10 2009 056 161 A1 ist eine Schmiermittelversorgungseinrichtung für eine Brennkraftmaschine mit einem aus parallel zueinander angeordneten Platten bestehenden Wärmetauscher und einer Bypassleitung bekannt, wobei vor dem Wärmetauscher ein Bypassventil vorgesehen ist, das mittels eines elektrischen Aktuators zur Freigabe der Bypassleitung geöffnet und zur Sperrung der Bypassleitung geschlossen werden kann. Die Bypassleitung ist in einem separaten Bauteil angeordnet und kann unabhängig vom Wärmetauscher durchströmt werden. Das Fluid strömt seitlich parallel zu einer Erstreckungsrichtung der Kühlplatten des Wärmetauschers in den Wärmetauscher ein.
Aus US 4 669 532 A ist ein Wärmetauscher in Plattenbauweise bekannt. Dieser weist eine Vielzahl von parallel zueinander angeordneten Kühlplatten auf. Die Kühlplatten sind derart miteinander verbunden, dass zwischen den Kühlplatten parallel zu einer Erstreckungsrichtung der Platten verlaufende Strömungskanäle für ein abzukühlendes Fluid gebildet sind. Quer zu den Erstreckungsrichtungen der Kühlplatten erstreckt sich ein die Kühlplatten durchdringender Kanal, der durch eine mittels eines Regelelements bedarfsweise verschließbare Öffnung derart fortgeführt ist, dass eine Teilmenge des zu kühlenden Fluid bei geöffnetem Regelelement in einen die Strömungskanäle umgehenden Bypasskanal strömen kann. Das Regelelement ist dazu ausgebildet, sich bei der Unterschreitung einer gewissen Temperatur des zu kühlenden Fluid zu öffnen. Hierfür weist das Regelelement eine Fluidverbindung zu dem zu kühlenden Fluid auf. Dabei weist das Regelelement eine Bimetallfeder als Aktor auf.
Aus KR 101 526 427 B1 ist ein Bypassventil für einen Plattenkondensator mit einem Bypass bekannt, der sich durch die Platten hindurch und somit quer zur Erstreckungsrichtung der Platten erstreckt.
Aus DE 10 2009 024 263 A1 ist ein Dehnstoffelement bekannt, dessen Verwendbarkeit unabhängig von Plattenkondensatoren beschrieben ist.
Der Erfindung liegt die Aufgabe zugrunde, einen Wärmetauscher in Plattenbauweise mit Bypass gemäß dem Oberbegriff des Anspruchs 1 zur Verfügung zu stellen, der kostengünstig in verschiedenen Varianten herstellbar ist. Ferner soll ein Verfahren zur Herstellung eines solchen Wärmetauschers in Plattenbauweise mit Bypass zur Verfügung gestellt werden, das kostengünstig und variabel durchführbar ist. Besonders bevorzugt sind hierbei konstruktive Lösungen, die ein einfaches Umrüsten existierender Wärmetauscher ermöglichen bzw. mit nur geringen Eingriffen in eine vorhandene Konstruktion verbunden sind.

DE 10 2008 020609 A1 zeigt einen Wärmetauscher gemäß dem Oberbegriff des Anspruchs 1.

Die Lösung der Aufgabe erfolgt erfindungsgemäß mit einem Wärmetauscher in Plattenbauweise mit Bypass bzw. mit einem Verfahren zur Herstellung eines Wärmetauschers in Plattenbauweise mit Bypass und mit den Merkmalen der unabhängigen Ansprüche. Weitere praktische Ausführungsformen sind in Verbindung mit den abhängigen Ansprüchen beschrieben.

Ein erfindungsgemäßer Wärmetauscher in Plattenbauweise umfasst eine Vielzahl von parallel zueinander angeordneten und derart miteinander verbundenen Kühlplatten, dass zwischen den Kühlplatten sich parallel zu einer Erstreckungsrichtung der Kühlplatten erstreckende Kühl-Strömungskanäle für ein zu kühlendes Fluid gebildet sind, wobei sich quer zu den Erstreckungsrichtungen der Kühlplatten mindestens ein die Kühlplatten durchdringender Kanal erstreckt, wobei der Kanal durch eine in einer außenseitigen Kühlplatte ausgebildete, mittels eines Regelelements bedarfsweise verschließbare Öffnung derart fortgeführt ist, dass zumindest eine Teilmenge des zu kühlenden Fluids bei geöffnetem Regelelement durch diese Kühlplatte hindurch in mindestens einen, die Kühl-Strömungskanäle umgehenden Bypasskanal strömen kann. Dabei ist der Bypasskanal zumindest teilweise durch die außenseitige Kühlplatte und mindestens eine weitere Platte derart gebildet, dass sich der Bypasskanal parallel zu den Kühl-Strömungskanälen erstreckt, wobei das Regelelement ein translatorisch und/oder rotatorisch verfahrbares Verschlusselement umfasst, das in einer Öffnung eines Gehäuseabschnitts angeordnet ist, der außerhalb der die Kühl-Strömungskanäle bildenden Kühlplatten angeordnet ist, Als Bypasskanal bevorzugt, sind Kanäle, deren Strömungsquerschnitt deutlich größer ist als der mittlere Strömungsquerschnitt durch die Kühl-Strömungskanäle. Mit "Plattenbauweise" ist in Verbindung mit der vorliegenden Erfindung insbesondere die aus der Praxis bekannte Bauweise gemeint, bei welcher zumindest die sich quer zur Erstreckungsebene der Kühlplatten erstreckenden Seitenwände des Wärmetauschers durch die miteinander verbundenen Kühlplatten gebildet sind. Mit anderen Worten ausgedrückt, wird für solche Wärmetauscher kein die Kühlplatten umgebendes Gehäuse als separates Bauteil hergestellt, sondern das Gehäuse wird durch die Kühlplatten und deren Verbindung selbsttragend gebildet. Erfindungsgemäße Wärmetauscher, bei welchen mindestens eine Öffnung durch eine außenseitige Bypassplatte ausgebildet ist, haben den Vorteil, dass auf einfache und kostengünstige Art und Weise Wärmetauscher in Plattenbauweise hergestellt werden können, die eine Bypassfunktion aufweisen. Eine solche Bypassfunktion ist insbesondere in Verbindung mit Brennkraftmaschinen oder Getrieben von Vorteil, beispielsweise für Kraftfahrzeuge, um den Strömungswiderstand für ein durch den Wärmetauscher gefördertes Fluid zu reduzieren, wenn eine Kühlung aufgrund des Betriebszustandes noch nicht erforderlich ist, beispielsweise während einer Kaltstartphase einer Brennkraftmaschine. So kann die Effizienz des Wärmetauschers verbessert und letztlich die Umwelt durch Reduzierung von Emissionen geschont werden.

Die Herstellung eines erfindungsgemäßen Wärmetauschers, sei es beispielsweise durch Umrüstung oder durch Modifikation einer bestehenden Montagelinie, ist besonders einfach, wenn der Bypasskanal zumindest teilweise durch eine außenseitige Kühlplatte und mindestens eine Bypassplatte gebildet ist. Dabei ist der zusätzliche Montageaufwand umso geringer, je geringer die Zahl der zusätzlich benötigen Teile ist. Insoweit ist es besonders bevorzugt, wenn nur eine zusätzliche Bypassplatte für die Bildung des gesamten Bypasskanals erforderlich ist.

In einer weiteren praktischen Ausführungsform eines erfindungsgemäßen Wärmetauschers weist die verschließbare Öffnung die gleiche Strömungsquerschnittsfläche auf wie der mindestens eine Kanal. Bei Wärmetauschern für Brennkraftmaschinen kann der Durchmesser eines Kanals beispielsweise zwischen 10 mm und 20 mm liegen, bevorzugt zwischen 12 mm und 16 mm und besonders bevorzugt zwischen 13 mm und 15 mm. In diesem Fall kann die Öffnung in der außenseitigen Kühlplatte, wenn sie als Bohrung nach dem Verbinden der Kühlplatten und der optionalen mindestens einen Bypassplatte(n) eingebracht wird, praktisch ohne zusätzlichen Aufwand hergestellt werden. Ferner ist diese Ausgestaltung vorteilhaft, um durch Verbinden der Kühlplatten und der optionalen Bypassplatte(n) mittels Löten eine dichte Verbindung der genannten Platten im Bereich des Kanals zu erzielen.

Die Erfindung wurde insbesondere für Wärmetauscher entwickelt, bei welchen sich quer zu den Erstreckungsrichtungen der Kühlplatten mindestens ein zweiter, die Kühlplatten durchdringender Kanal erstreckt. Bei derartigen Wärmetauschern kann das zu kühlende Fluid auf der gleichen Seite des Wärmetauschers ein- und ausströmen, beispielsweise auf einer zu einem Zylinderkurbelgehäuse orientierten Seite. Dies hat den Vorteil, dass der Wärmetauscher unmittelbar angrenzend an ein anderes Bauteil angeordnet werden kann, um das zu kühlende Fluid auf einem besonders kurzen Weg aus diesem Bauteil durch den Wärmetauscher und dann wieder zurück in das Bauteil zu führen. Der zweite Kanal ist vorzugsweise auf der gegenüberliegenden Seite des ersten Kanals angeordnet, so dass ein Kanal als Einströmkanal beispielsweise auf einer linken Seite des Wärmetauschers und der andere Kanal als Ausströmkanal auf der rechten Seite des Wärmetauschers angeordnet ist.

Der Bypasskanal wird erfindungsgemäß temperaturabhängig geöffnet und geschlossen. Als Regelelement wird ein temperaturabhängiges Regelelement eingesetzt. Im vorliegenden Fall weist das Regelelement einen mechanischen Temperaturregler, der eine Fluidverbindung zu dem zu kühlenden Fluid aufweist, auf. Darunter werden solche Temperaturregler verstanden, die einen mit einem Medium, nämlich Gas, einer Flüssigkeit oder einem Wachs gefüllten Aktor aufweisen, dessen Volumenänderung ausreichend groß ist, um diese für ein Verschließen der Öffnung zu nutzen. Das Verschließen kann dabei entweder durch den Aktor selbst erfolgen oder durch ein funktional mit dem Aktor verbundenes Verschlusselement.

Die Erfindung wurde insbesondere für Wärmetauscher entwickelt, bei welchen quer zur Strömungsrichtung durch die Kühl-Strömungskanäle von den Kühl-Strömungskanälen separierte Kühlfluid-Kanäle ausgebildet sind, die zumindest teilweise zwischen den Kühl-Strömungskanälen verlaufen. Bevorzugt grenzt bei solchen Wärmetauschern an jeden Kühl-Strömungskanal mindestens ein Kühlfluid-Kanal. Besonders bevorzugt ist es, wenn jeder Kühl-Strömungskanal mehrseitig, insbesondere zweiseitig, von Kühlfluid-Kanälen umgeben ist.

Weiter bevorzugt hinsichtlich einer hohen Kühlleistung des Wärmetauschers ist es, wenn Bereiche zwischen den Kanälen und der nächstliegenden Außenseite des Wärmetauschers ebenfalls mit von den Kühl-Strömungskanälen separierten Kühlfluid-Kanälen ausgebildet sind, da in diesem Fall das zu kühlende Fluid auch beidseitig der Kanäle mittels des Kühlfluids gekühlt werden kann.

Bevorzugt ist es, wenn die Kühl-Strömungskanäle und/oder der mindestens eine Bypasskanal und/oder die Kühlfluid-Kanäle durch fest miteinander verbundene Platten gebildet sind. Als ein zur Herstellung erfindungsgemäßer Wärmetauscher besonders geeignetes Verbindungsverfahren wird auf stoffschlüssige Verbindungsverfahren, insbesondere auf Löten verwiesen. Ein solcher Lötvorgang kann in der Serienfertigung automatisiert mittels Tunnelöfen erfolgen. Wie bereits erläutert, werden die sich quer zu den Erstreckungsrichtungen der Kühlplatten erstreckenden Außenseiten des Wärmetauschers vorzugsweise durch miteinander verbundene Stoßkanten der Kühlplatten gebildet, so dass auf ein separates Gehäuse als zusätzliches Teil verzichtet werden kann.

Das Regelelement umfasst ein translatorisch und/oder rotatorisch verfahrbares Verschlusselement, das in einer Öffnung eines Gehäuseabschnitts angeordnet ist, der außerhalb der die Kühl-Strömungskanäle bildenden Kühlplatten angeordnet ist. In Verbindung mit einem temperaturgesteuerten mechanischen Temperaturregler und in Verbindung mit der beschriebenen Plattenbauweise ist es insoweit besonders bevorzugt, wenn das Verschlusselement rein translatorisch verfahren wird, insbesondere in Verlängerung eines Kanals in Richtung der Kanalachse.

Herstellungstechnisch besonders einfach lässt sich ein erfindungsgemäßer Wärmetauscher realisieren, wenn der Gehäuseabschnitt angrenzend an eine außenseitige Bypassplatte angeordnet ist, denn in diesem Fall kann er, während der Herstellung an einer gut zugänglichen Stelle einfach in einer Solllage angeordnet und mit dieser fest verbunden werden, insbesondere durch einen Lötvorgang.

Insbesondere wenn das Regelelement in Verbindung mit einem Rückstellelement, wie z.B. einer Feder, in einem Gehäuse eingesetzt wird, ist es vorteilhaft in dem Gehäuseabschnitt selbst ein in Richtung Innenseite hervorragender Absatz ausgebildet ist oder wenn der Gehäuseabschnitt und die daran angrenzende Bypassplatte derart angeordnet sind, dass die Bypassplatte innenseitig gegenüber einer an die Bypassplatte angrenzenden Öffnung hervorsteht, so dass ein Absatz im Bereich der Gehäuseöffnung gebildet ist. Denn in diesem Fall kann der ohne zusätzlichen Montageaufwand erzeugte Absatz als Anschlagelement für das Rückstellelement genutzt werden.

Die Strömungsquerschnittsfläche durch den Bypasskanal wird vorzugsweise im Bereich von ca. 50 Prozent bis 150 Prozent der Strömungsquerschnittsfläche der Strömungsquerschnittsfläche im Bereich eines die Kühlplatten durchdringenden Kanals gewählt. Besonders bevorzugt ist ein Bereich von 70 Prozent bis 130 Prozent und weiter bevorzugt ein Bereich von 80 Prozent bis 100 Prozent. Dies gilt insbesondere für Wärmetauscher, bei welchen die Summe der Strömungsquerschnittsflächen durch sämtliche Kühl-Strömungskanäle ein Vielfaches der Strömungsquerschnittsfläche durch den Kanal liegt, insbesondere das 2-10fache, bevorzugt das 3-8fache und weiter bevorzugt das 4-5fache.

Die Erfindung betrifft auch ein Verfahren zur Herstellung eines Wärmetauschers in Plattenbauweise mit einer Vielzahl von parallel zueinander angeordneten und derart miteinander verbundenen Kühlplatten, dass zwischen den Kühlplatten parallel zu einer Erstreckungsrichtung der Kühlplatten eine Vielzahl von Kühl-Strömungskanälen für ein zu kühlendes Fluid gebildet sind, wobei sich quer zu den Erstreckungsrichtungen der Kühlplatten mindestens ein die Kühlplatten durchdringender Kanal erstreckt, wobei der Kanal durch eine in einer außenseitigen Kühlplatte ausgebildete, mittels eines Regelelements bedarfsweise verschließbare Öffnung derart fortgeführt ist, dass Fluid bei geöffnetem Regelelement durch diese Kühlplatten hindurch in mindestens einen Bypasskanal strömen kann, wobei der Bypasskanal zumindest teilweise durch die außenseitige Kühlplatte und mindestens eine Bypassplatte derart gebildet ist, dass sich der Bypasskanal parallel zu den Kühl-Strömungskanälen erstreckt, wobei das Regelelement ein translatorisch und/oder rotatorisch verfahrbares Verschlusselement umfasst, das in einer Öffnung eines Gehäuseabschnitts angeordnet ist, der außerhalb der die Kühl-Strömungskanäle bildenden Kühlplatten angeordnet ist, und wobei das Regelelement zumindest teilweise in einer außerhalb der die Kühl-Strömungskanäle bildenden Kühlplatten liegenden Öffnung eines Gehäuseabschnitts angeordnet ist, wobei das Verfahren folgende Verfahrensschritte umfasst:
a) In einem ersten Verfahrensschritt werden die die Kühl-Strömungskanäle bildenden Kühlplatten, die mindestens eine Bypassplatte in Endmontageposition zumindest teilweise außenseitig zugänglicher Gehäuseabschnitt für das Regelelement in Sollage zueinander ausgerichtet und stoffschlüssig zu einem Bauteil miteinander verbunden,
b) in einem zweiten Verfahrensschritt wird das Regelelement von außen in den Gehäuseabschnitt eingesetzt und montiert.

Dieses Verfahren ermöglicht es, mit - im Vergleich zur Herstellung von Wärmetauschern ohne Bypasskanal - nur geringem Zusatzaufwand und somit einfach und kostengünstig, einen Wärmetauscher in Plattenbauweise mit Bypasskanal herzustellen. Auf die vorstehend in Verbindung mit dem erfindungsgemäßen Wärmetauscher beschriebenen Vorteile sowie die für den Fachmann aus den beschriebenen Konstruktionsvarianten ersichtlichen Verfahrensschritte wird hiermit verwiesen.

Weitere praktische Ausführungsformen der Erfindung sind nachfolgend im Zusammenhang mit den Zeichnungen beschrieben. Es zeigen:
- Fig. 1: eine perspektivische Ansicht eines Ausführungsbeispiels eines erfindungsgemäßen Wärmetauschers,
- Fig. 2: eine Schnittdarstellung gemäß einem Vertikalschnitt entlang der Linie II-II in Figur 1 mit geöffnetem Regelelement,
- Fig. 3: eine Schnittdarstellung gemäß einem Vertikalschnitt entlang der Linie II-II in Figur 1 mit geschlossenem Regelelement,
- Fig. 4: eine vergrößerte Darstellung des in Figur 2 mit IV gekennzeichneten Bereichs und
- Fig. 5: eine perspektivische Einzeldarstellung des Verschlusselements des Regelelements

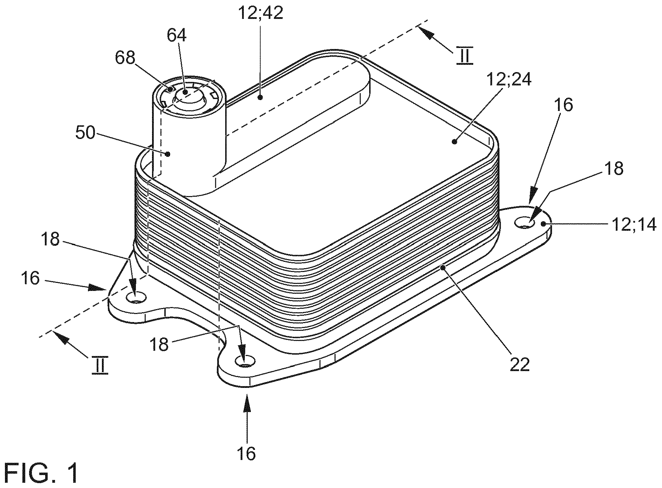

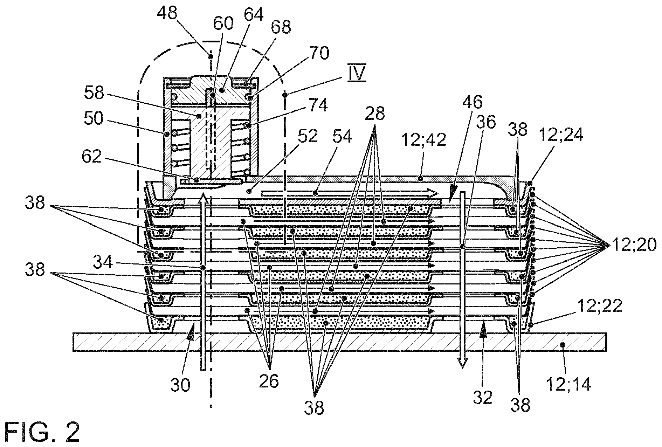

Anhand der Figuren 1 und 2 wird nun zunächst der Grundaufbau eines erfindungsgemäßen Wärmetauschers 10 in Plattenbauweise mit einer Vielzahl von parallel zueinander angeordneten Platten 12 beschrieben. In der gezeigten Ausführungsform sind alle Platten 12 durch Löten fest zu einem selbsttragenden Gebilde miteinander verbunden.

Bei der untersten Platte 12 in Figur 1 handelt es sich um eine Befestigungsplatte 14 mit einer - im Vergleich zu den darüber angeordneten Platten 12 - größeren Plattendicke. Wie in Figur 1 erkennbar ist, weist die Befestigungsplatte 14 seitlich herausragende Befestigungsbereiche 16 auf, in welchen als Anschraubauge dienende Durchgangsöffnungen 18 ausgebildet sind. Diese dienen bei dem vorliegenden Ausführungsbeispiel zum direkten Anschrauben des Wärmetauschers 10 an ein nicht dargestelltes Zylinderkurbelgehäuse einer ebenfalls nicht dargestellten Brennkraftmaschine.

Unmittelbar oberhalb der Befestigungsplatte 14 sind sogenannte Kühlplatten 20, 22, 24 angeordnet, wobei die unterste Kühlplatte 22 und die oberste Kühlplatte 24 gegenüber den dazwischen angeordneten mittleren Kühlplatten 20 eine größere Plattendicke aufweisen. Die Kühlplatten 20, 22, 24 sind derart angeordnet und miteinander verbunden, dass zwischen den Kühlplatten 20, 22, 24 sich parallel zu der gezeigten Quererstreckungsrichtung der Kühlplatten 20, 22, 24 erstreckende Kühl-Strömungskanäle 26 für ein zu kühlendes Fluid gebildet sind. Das zu kühlende Fluid kann in Richtung der Pfeile 28 durch diese Kühl-Strömungskanäle 26 strömen, um von einem ersten Kanal 30 zu einem zweiten Kanal 32 zu gelangen.

Der erste Kanal 30 und der zweite Kanal 32 erstrecken sich quer (hier: senkrecht) zu den Erstreckungsrichtungen der Kühlplatten 20, 22, 24. Die Erstreckungsrichtungen der Kühlplatten 20, 22, 24 befinden sich alle in den sogenannten Erstreckungsebenen der Kühlplatten 20, 22, 24, welche in den Figuren 2-4 in horizontaler Richtung orientiert sind. Die Kanäle 30, 32 sind senkrecht dazu ausgerichtet und verlaufen somit in den Figuren 2-4 in vertikaler Richtung.

Der erste Kanal 30 dient in der gezeigten Ausführungsform dazu, ein zu kühlendes Fluid, insbesondere Öl einer Brennkraftmaschine oder Öl aus einem Getriebe, in Richtung des Pfeils 34 zu den Kühl-Strömungskanälen 26 zu fördern. Dieser erste Kanal 30 kann somit auch als Einströmkanal oder Verteilerkanal bezeichnet werden. Das Öl wird dann, wenn es in Richtung der Pfeile 28 durch die Kühl-Strömungskanälen 26 strömt, mittels der Kühlplatten 20, 22, 24 abgekühlt, im zweiten Kanal 32 zusammengeführt und in Richtung des Pfeils 36 wieder aus dem Wärmetauscher ausgeleitet. Der zweite Kanal 32 kann daher auch als Ausströmkanal oder Sammelkanal bezeichnet werden.

Zur Wärmeabfuhr, insbesondere von den Kühlplatten 20, 22, 24, sind aufgrund der Gestaltung und Verbindung der Kühlplatten von den Kühl-Strömungskanälen 26 separierte Kühlfluid-Kanäle 38 jeweils beidseitig der Kühl-Strömungskanäle 26 (nämlich in den Figuren 2-4 darüber und darunter) sowie beidseitig der Kanäle 30, 32 (nämlich in den Figuren 2-4 links und rechts davon) ausgebildet. Durch diese Kühlfluid-Kanäle 38 wird ein Kühlfluid, wie beispielsweise Wasser, geleitet, das die in die Kühlplatten 20, 22, 24 eingeleitete Wärme überträgt und über einen separaten Fluidkreislauf (nicht dargestellt) abführt.

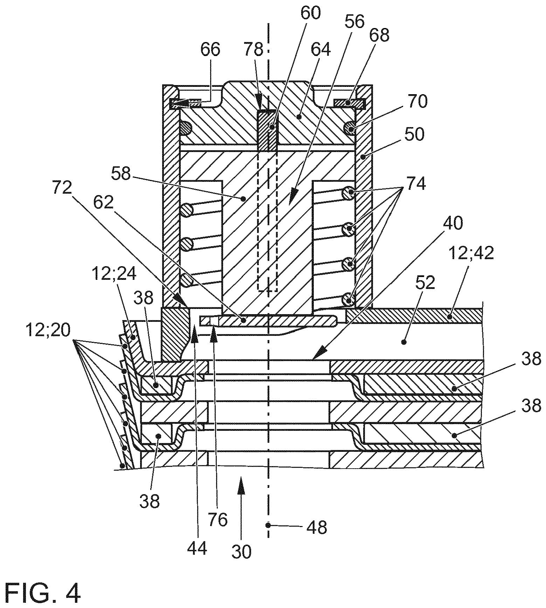

Wie insbesondere aus den Figuren 2 und 4 ersichtlich ist, sind in der obersten Kühlplatte 24, die eine äußere Kühlplatte ist, Öffnungen 40, 46 in Verlängerung der Kanäle 30, 32 ausgebildet, welche - wenn sie, wie in den Figuren 2 und 4 dargestellt, freigegeben sind - ungehindert von Fluid durchströmt werden können. Oberhalb der obersten Kühlplatte 24 ist eine Bypassplatte 42 angeordnet, in welcher eine Öffnung 44 ausgebildet ist, die zu einem in Verlängerung des Kanals 30 entlang der Kanalachse 48 angeordneten, zylindrischen Gehäuseabschnitt 50 führt. Die Bypassplatte 42, welche fest mit der obersten Kühlplatte 24 verbunden ist, ist derart gestaltet, dass sich zwischen der Bypassplatte 42 und der obersten Kühlplatte 24 ein Bypasskanal 52 ergibt, der vollständig in Richtung des Pfeils 54 von Fluid durchströmt wird, wenn die Öffnung 40 geöffnet ist.

In dem Gehäuseabschnitt 50 ist ein mechanischer Temperaturregler 56 eingesetzt, der in der gezeigten Ausführungsform aus folgenden Elementen besteht: einem mit Wachs (nicht dargestellt) gefüllten Volumenkörper 58, einem funktional innerhalb des Volumenkörpers angeordneten Stift 60 und einem an der Unterseite des Volumenkörpers 58 ausgebildeten Verschlusselement 62. Das Verschlusselement 62 kann alternativ auch als separates Element hergestellt und in geeigneter Art und Weise mit dem Volumenkörper 62 verbunden sein.

Der Stift 60 ist mit seiner oberen Stirnseite 78 in einem Deckel 64 aufgenommen. Der Deckel 64 ist, wie in den Figuren 1 und 2 ansatzweise zu erkennen ist, mittels eines in einer Nut 66 festgelegten Sicherungsrings 68 in dem Gehäuseabschnitt 50 festgelegt und mittels eines Dichtelements 70 gegenüber dem Gehäuseabschnitt 50 abgedichtet.

Wie aus Figur 4 erkennbar ist, ist die in der Bypassplatte 42 ausgebildete Öffnung 44 größer als das Verschlusselement 62, so dass auch dann Fluid in den Gehäuseabschnitt 50 mit dem Volumenkörper 58 strömen kann, wenn sich das Verschlusselement 62 in der in den Figuren 2 und 4 gezeigten geöffneten Stellung befindet. In Figur 4 ist ferner ersichtlich, dass die in der Bypassplatte 42 ausgebildete Öffnung 44 kleiner ist als die sich anschließende Öffnung in dem Gehäuseabschnitt 50. Dadurch ist ein Absatz 72 gebildet, der als Anlagefläche für eine in dem Gehäuseabschnitt 50 angeordnete, den Volumenkörper 58 teilweise umgebenden Feder 74 dient. Bei der gezeigten Feder 74 handelt es sich um eine Schraubenfeder.

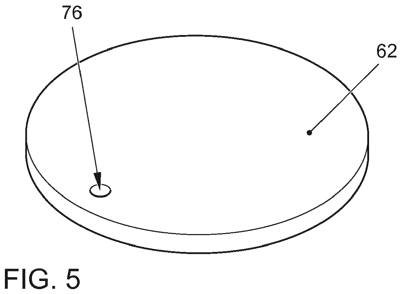

Wie aus der Einzeldarstellung des Verschlusselements 62 in Figur 5 ersichtlich ist, handelt es sich bei dem Verschlusselement 62 um eine kreisscheibenartig ausgebildete Scheibe mit einer Leckageöffnung 76. Diese Leckageöffnung 76 stellt sicher, dass auch in der geschlossenen Stellung des Verschlusselements 62 eine gewisses Mindestmenge an Fluid in den Bypasskanal 42 und in den Gehäuseabschnitt 50 zu dem Regelelement 56 gelangen kann.

Der erfindungsgemäße Wärmetauscher 10 funktioniert wie folgt: Wenn die Temperatur des durch den Kanal 30 einströmenden Fluides unterhalb eines vorgegebenen Wertes (Grenztemperatur), beispielsweise 100 °C, liegt, befindet sich das Regelelement 56 in der in den Figuren 2 und 4 gezeigten, geöffneten Stellung. Das Fluid kann dann ungehindert durch den Bypasskanal 52 strömen. Zusätzlich strömt das Fluid gleichzeitig durch die Kühl-Strömungskanäle. Aufgrund des geöffneten Bypasskanals 52 ist der Strömungswiderstand deutlich reduziert und der Energiebedarf für die (in diesem Zustand nicht erforderliche) Kühlung gering.

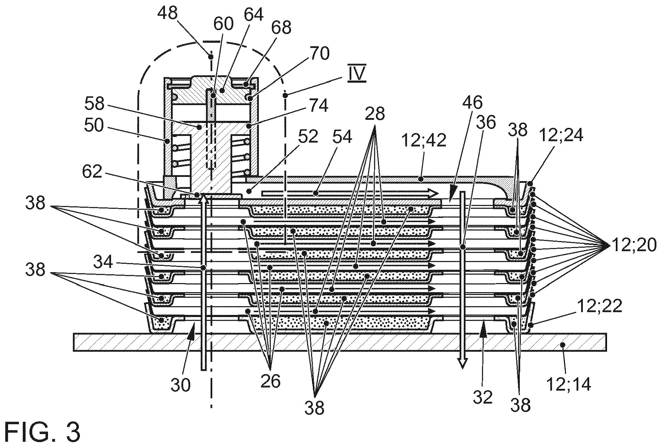

Erreicht das Fluid eine bestimmte Grenztemperatur, die abhängig von der Auslegung des Regelelements 56 ist, z.B. 100 °C, dehnt sich der Volumenkörper 56 aus und bewirkt, dass sich der Stift 60 aus dem Volumenkörper 56 herausdrückt. Dadurch wird das Verschlusselement 62 in die in Figur 3 gezeigte, geschlossene Stellung verfahren. In dieser Stellung liegt das Verschlusselement 62 derart an der Öffnung 40 an, dass Fluid ausschließlich oder nahezu ausschließlich durch die Leckageöffnung 76 in den Bypasskanal 52 und zu dem Volumenkörper 58 des Regelelements 56 strömen kann. Die Strömung durch den Bypasskanal 52 ist dadurch deutlich reduziert und führt zu einer erhöhten und verbesserten Kühlung des Fluids.

Sobald das Fluid für eine gewisse Zeit die Grenztemperatur wieder unterschreitet, reduziert sich das Volumen des Volumenkörpers 58, und der Stift 60 wird - durch Unterstützung des Rückstellelements 74 zurück in den Volumenkörper 58 gedrückt, wobei das Verschlusselement 62 gleichzeitig in die in den Figuren 2 und 4 gezeigte geöffnete Stellung zurück verfahren wird.

Die Montage des in Verbindung mit den Figuren 1-5 beschriebenen Wärmetauschers 10 kann auf einfache und kostengünstige Art und Weise dadurch erfolgen, dass sämtliche Platten 12 in Sollage zueinander gebracht und miteinander zu einem einstückigen Gebilde stoffschlüssig verbunden werden, insbesondere durch Löten und besonders bevorzugt durch Löten in einem Tunnelofen. Anschließend können von der Oberseite des Gehäuseabschnitts 50 aus das Rückstellelement 74, das Regelelement 56 und der Deckel 64 mit dem Sicherungsring 68 in den Gehäuseabschnitt 50 eingesetzt werden.

In der gezeigten Ausführungsform beträgt der Durchmesser in den Kanälen 30, 32 jeweils 14,5 mm, woraus sich eine Strömungsquerschnittsfläche im Bereich der Kanäle von ungefähr 165 mm² ergibt. Die Strömungsquerschnittfläche im Bereich des Bypasskanals beträgt ca. 145 mm², die Summe der Strömungsquerschnittflächen durch die Kühl-Strömungskanäle 26 beträgt ca. 700 mm².

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Diesbezüglich wird insbesondere darauf verwiesen, dass der in der gezeigten Ausführungsform ausgebildete Absatz 72 für das Rückstellelement 74 auch einstückig in dem Gehäuseabschnitt 50 ausgebildet sein kann. In diesem Fall ist es zur Montage des Gehäuseabschnitts 50 mit der Bypassplatte 42 sowie zur relativen Ausrichtung dieser Elemente bevorzugt, wenn auch außenseitig an dem Gehäuseabschnitt 50 ein Absatz derart angeordnet ist, dass der Gehäuseabschnitt 50 in Montagelage mit der zur Bypassplatte 42 weisenden Fläche des Absatzes an einer die Öffnung 44 im Bereich der Außenseite der Bypassplatte 42 umgebenden Fläche anliegt und darüber hinaus der sich unterhalb des Absatzes anschließende Bereich des Gehäuseabschnitts 50 in die Öffnung 44 eintaucht, so dass eine außenseitige Umfangsfläche des Gehäuseabschnitts mit der Umfangsfläche der Öffnung 44 zur Anlage kommt.

### Bezugszeichenliste

- 10: Wärmetauscher
- 12: Platte
- 14: Befestigungsplatte
- 16: Befestigungsbereich
- 18: Durchgangsöffnung
- 20: mittlere Kühlplatte
- 22: unterste Kühlplatte
- 24: oberste Kühlplatte
- 26: Kühl-Strömungskanal
- 28: Pfeil
- 30: erster Kanal
- 32: zweiter Kanal
- 34: Pfeil
- 36: Pfeil
- 38: Kühlfluid-Kanal
- 40: Öffnung (in Kühlplatte)
- 42: Bypassplatte
- 44: Öffnung (in Bypassplatte)
- 46: Öffnung (in Kühlplatte)
- 48: Kanalachse
- 50: Gehäuseabschnitt
- 52: Bypasskanal
- 54: Pfeil
- 56: Regelelement
- 58: Volumenkörper
- 60: Stift
- 62: Verschlusselement
- 64: Deckel
- 66: Nut
- 68: Sicherungsring
- 70: Dichtelement
- 72: Absatz
- 74: Rückstellelement
- 76: Leckageöffnung
- 78: Stirnseite

## Patentansprüche

1. Wärmetauscher in Plattenbauweise mit einer Vielzahl von parallel zueinander angeordneten und derart miteinander verbundenen Kühlplatten (20, 22, 24), dass zwischen den Kühlplatten (20, 22, 24) parallel zu einer Erstreckungsrichtung der Kühlplatten verlaufende Kühl-Strömungskanäle (26) für ein zu kühlendes Fluid gebildet sind, wobei sich quer zu den Erstreckungsrichtungen der Kühlplatten (20, 22, 24) mindestens ein die Kühlplatten durchdringender Kanal (30) erstreckt, wobei der Kanal (30) durch eine in einer außenseitigen Kühlplatte ausgebildete, mittels eines Regelelements (56) bedarfsweise verschließbare Öffnung (40) derart fortgeführt ist, dass zumindest eine Teilmenge des zu kühlenden Fluids bei geöffnetem Regelelement (56) durch diese Kühlplatten (20, 22, 24) hindurch in mindestens einen, die Kühl-Strömungskanäle (26) umgehenden Bypasskanal (52) strömen kann, wobei der Bypasskanal (52) zumindest teilweise durch die außenseitige Kühlplatte (24) und mindestens eine weitere Platte (12) derart gebildet ist, dass sich der Bypasskanal (52) parallel zu den Kühl-Strömungskanälen (26) erstreckt, wobei das Regelelement (56) ein translatorisch und/oder rotatorisch verfahrbares Verschlusselement umfasst, das in einer Öffnung eines Gehäuseabschnitts (50) angeordnet ist, der außerhalb der die Kühl-Strömungskanäle (26) bildenden Kühlplatten (24) angeordnet ist, und wobei das Regelelement einen mechanischen Temperaturregler aufweist, der eine Fluidverbindung zu dem zu kühlenden Fluid aufweist, **dadurch gekennzeichnet, dass** der Temperaturregler einen mit einem Gas, einer Flüssigkeit oder einem Wachs gefüllten Aktor aufweist.

2. Wärmetauscher nach dem vorstehenden Anspruch, **dadurch gekennzeichnet, dass** der Bypasskanal (52) zumindest teilweise durch eine außenseitige Kühlplatte (24) und mindestens eine Bypassplatte (42) gebildet ist.

3. Wärmetauscher nach einem oder mehreren der vorstehenden Ansprüche, **dadurch gekennzeichnet, dass** die verschließbare Öffnung (40) die gleiche Strömungsquerschnittsfläche aufweist wie der mindestens eine die Kühlplatten durchdringende Kanal (30).

4. Wärmetauscher nach einem oder mehreren der vorstehenden Ansprüche, **dadurch gekennzeichnet, dass** sich quer zu den Erstreckungsrichtungen der Kühlplatten (20, 22, 24) mindestens ein zweiter, die Kühlplatten durchdringender Kanal (32) erstreckt.

5. Wärmetauscher nach dem vorstehenden Anspruch, **dadurch gekennzeichnet, dass** mindestens eine Bypassplatte (42) gemeinsam mit der außenseitigen Kühlplatte einen den ersten Kanal (30) mit dem mindestens zweiten Kanal (32) verbindenden Bypass (52) bildet.

6. Wärmetauscher nach einem oder mehreren der vorstehenden Ansprüche, **dadurch gekennzeichnet, dass** das Regelelement (56) einen mechanischen Temperaturregler umfasst, der eine Fluidverbindung zu dem zu kühlenden Fluid aufweist.

7. Wärmetauscher nach einem oder mehreren der vorstehenden Ansprüche, **dadurch gekennzeichnet, dass** quer zur Strömungsrichtung durch die Kühl-Strömungskanäle (26) von den Kühl-Strömungskanälen (26) separierte Kühlfluid-Kanäle (38) ausgebildet sind, die zumindest teilweise zwischen den Kühl-Strömungskanälen (26) verlaufen.

8. Wärmetauscher nach dem vorstehenden Anspruch, **dadurch gekennzeichnet, dass** der Gehäuseabschnitt (50) angrenzend an eine Bypassplatte (42) angeordnet ist.

9. Verfahren zur Herstellung eines Wärmetauschers in Plattenbauweise nach Anspruch 1, **gekennzeichnet durch** folgende Verfahrensschritte:
a) In einem ersten Verfahrensschritt werden die die Kühl-Strömungskanäle (26) bildenden Kühlplatten (20, 22, 24), die mindestens eine weitere Platte (12) und ein in Endmontageposition zumindest teilweise außenseitig zugänglicher Gehäuseabschnitt (50) für das Regelelement (56) in Sollage zueinander ausgerichtet und stoffschlüssig zu einem Bauteil miteinander verbunden und
b) in einem zweiten Verfahrensschritt wird das Regelelement (56) von außen in den Gehäuseabschnitt (50) eingesetzt und montiert.

## Claims

1. Heat exchanger of plate-type design, having a multiplicity of cooling plates (20, 22, 24) which are arranged parallel to one another and which are connected to one another such that cooling flow channels (26) for a fluid to be cooled are formed between the cooling plates (20, 22, 24), said channels running parallel to a direction of extent of the cooling plates, wherein at least one channel (30) passing through the cooling plates extends transversely with respect to the directions of extent of the cooling plates (20, 22, 24), wherein the channel (30) is continued by way of an opening (40), formed in an outer cooling plate and able to be closed off according to requirement by means of a regulating element (56), such that, when the regulating element (56) is open, at least a partial amount of the fluid to be cooled is able to flow through said cooling plates (20, 22, 24) into at least one bypass channel (52) which bypasses the cooling flow channels (26), wherein the bypass channel (52) is formed at least partially by the outer cooling plate (24) and at least one further plate (12) such that the bypass channel (52) extends parallel to the cooling flow channels (26), wherein the regulating element (56) comprises a translationally and/or rotationally movable closure element which is arranged in an opening of a housing section (50) which is arranged outside the cooling plates (24) forming the cooling flow channels (26), and wherein the regulating element has a mechanical temperature regulator which has a fluidic connection to the fluid to be cooled, **characterized in that** the temperature regulator has an actuator filled with a gas, a liquid or a wax.

2. Heat exchanger according to the preceding claim, **characterized in that** the bypass channel (52) is formed at least partially by an outer cooling plate (24) and at least one bypass plate (42).

3. Heat exchanger according to either or both of the preceding claims, **characterized in that** the closable opening (40) has the same flow cross-sectional area as the at least one channel (30) passing through the cooling plates.

4. Heat exchanger according to one or more of the preceding claims, **characterized in that** at least one second channel (32) passing through the cooling plates extends transversely with respect to the directions of extent of the cooling plates (20, 22, 24) .

5. Heat exchanger according to the preceding claim, **characterized in that** at least one bypass plate (42) forms, together with the outer cooling plate, a bypass (52) which connects the first channel (30) to the at least one second channel (32).

6. Heat exchanger according to one or more of the preceding claims, **characterized in that** the regulating element (56) comprises a mechanical temperature regulator which has a fluidic connection to the fluid to be cooled.

7. Heat exchanger according to one or more of the preceding claims, **characterized in that** cooling fluid channels (38), which are separated from the cooling flow channels (26) and which run at least partially between the cooling flow channels (26), are formed transversely with respect to the flow direction through the cooling flow channels (26).

8. Heat exchanger according to the preceding claim, **characterized in that** the housing section (50) is arranged adjacent to a bypass plate (42).

9. Method for producing a heat exchanger of plate-type design according to Claim 1, **characterized by** the following method steps:
a) in a first method step, the cooling plates (20, 22, 24) forming the cooling flow channels (26), the at least one further plate (12) and a housing section (50) for the regulating element (56), which housing section is at least partially accessible on the outside in the final assembly position, are oriented into the intended position with respect to one another and are connected to one another in an integrally bonded manner to form a component, and
b) in a second method step, the regulating element (56) is inserted into the housing section (50) from the outside and mounted.

## Revendications

1. Échangeur de chaleur de type à plaques comprenant une pluralité de plaques de refroidissement (20, 22, 24) qui sont disposées parallèlement les unes aux autres et qui sont reliées entre elles de telle sorte que des conduits d'écoulement de refroidissement (26), destinés à un fluide à refroidir et s'étendant parallèlement à une direction d'extension des plaques de refroidissement, sont formés entre les plaques de refroidissement (20, 22, 24), au moins un conduit (30), passant à travers les plaques de refroidissement, s'étendant transversalement aux directions d'extension des plaques de refroidissement (20, 22, 24), le conduit (30) poursuivant son chemin à travers une ouverture (40) ménagée dans une plaque de refroidissement extérieure et pouvant être fermée, si besoin est, au moyen d'un élément de régulation (56) de telle sorte qu'au moins une partie du fluide à refroidir puisse s'écouler, lorsque l'élément de régulation (56) est ouvert, à travers ces plaques de refroidissement (20, 22, 24) jusque dans au moins un conduit de dérivation (52) contournant les conduits d'écoulement de refroidissement (26), le conduit de dérivation (52) étant formé au moins partiellement à travers la plaque de refroidissement extérieure (24) et au moins une autre plaque (12) de telle sorte que le conduit de dérivation (52) s'étend parallèlement aux conduits d'écoulement de refroidissement (26), l'élément de régulation (56) comprenant un élément de fermeture qui peut se déplacer en translation et/ou en rotation et qui est disposé dans une ouverture d'une partie de boîtier (50) qui est disposée à l'extérieur des plaques de refroidissement (24) formant les conduits d'écoulement de refroidissement (26), et l'élément de régulation comprenant un régulateur de température mécanique qui comporte une liaison fluidique avec le fluide à refroidir, **caractérisé en ce que** le régulateur de température comprend un actionneur rempli de gaz, de liquide ou de cire.

2. Échangeur de chaleur selon la revendication précédente, **caractérisé en ce que** le conduit de dérivation (52) est formé au moins partiellement par une plaque de refroidissement extérieure (24) et au moins une plaque de dérivation (42).

3. Échangeur de chaleur selon l'une au moins des revendications précédentes, **caractérisé en ce que** l'ouverture (40), pouvant être fermée, présente la même section d'écoulement transversale que l'au moins un conduit (30) passant à travers les plaques de refroidissement.

4. Échangeur de chaleur selon l'une au moins des revendications précédentes, **caractérisé en ce qu'**au moins un deuxième conduit (32) passant à travers les plaques de refroidissement s'étend transversalement aux directions d'extension des plaques de refroidissement (20, 22, 24).

5. Échangeur de chaleur selon la revendication précédente, **caractérisé en ce qu'**au moins une plaque de dérivation (42) forme, conjointement avec la plaque de refroidissement extérieure, une dérivation (52) reliant le premier conduit (30) à l'au moins un deuxième conduit (32).

6. Échangeur de chaleur selon l'une au moins des revendications précédentes, **caractérisé en ce que** l'élément de régulation (56) comprend un régulateur de température mécanique qui comporte une liaison fluidique avec le fluide à refroidir.

7. Échangeur de chaleur selon l'une au moins des revendications précédentes, **caractérisé en ce que** des conduits de fluide de refroidissement (38), séparés des conduits d'écoulement de refroidissement (26) et s'étendant au moins partiellement entre les conduits d'écoulement de refroidissement (26), sont formés transversalement à la direction d'écoulement à travers les conduits d'écoulement de refroidissement (26).

8. Échangeur de chaleur selon la revendication précédente, **caractérisé en ce que** la partie de boîtier (50) est disposée de manière adjacente à une plaque de dérivation (42).

9. Procédé de fabrication d'un échangeur de chaleur à plaques selon la revendication 1, **caractérisé par** les étapes de procédé suivantes :
a) dans une première étape, les plaques de refroidissement (20, 22, 24) formant les conduits d'écoulement de refroidissement (26), l'au moins une autre plaque (12) et une partie de boîtier (50) accessible au moins partiellement depuis l'extérieur dans la position de montage finale (50) et destinée à l'élément de régulation (56) sont alignées les unes avec les autres dans la position théorique et sont reliées entre elles par une liaison de matière pour former un composant et
b) dans une deuxième étape, l'élément de régulation (56) est inséré et monté depuis l'extérieur dans la partie de boîtier (50).
